# EUROPEAN PATENT APPLICATION

(11) **EP 3 297 120 A1**
(43) Date of publication of application: **21.03.2018**
(21) Application number: 16856756.8
(22) Date of filing: 26.08.2016
(51) Int. Cl.: H02J 7/00

(54) **CHARGER HAVING ACTIVE PROTECTION FUNCTIONALITY AND CHARGING METHOD**

(30) Priority: 20.10.2015 CN 201510684942
(71) Applicant: Xi'an Tgood Intelligent Charging Technology Co. Ltd, Xi'an, Shaanxi 710065 (CN)
(72) Inventor: YUAN, Qingmin, Xi'an Shaanxi 710065 (CN)
(74) Representative: Rössler, Matthias
(86) International application number: PCT/CN2016/096808
(87) International publication number: WO 2017/067322

(57) **Abstract**

A charger with active protection function includes: a power conversion module group, a monitoring unit and an output module group; wherein the power conversion module group is respectively connected with the monitoring unit and the output module group; the monitoring unit is connected with the output module group; the charger with active protection function is connected with an electric vehicle via the output module group to charge the electric vehicle; and when the charger with active protection function is connected with the electric vehicle, the charger with active protection function communicates with BMS of a vehicle via the output module group. The output module group obtains real-time charging data of the electric battery of the BMS. The output module group combines the warn value and threshold value to judge whether the BMS and the power battery are in abnormal condition during charging process.

## Description

### Field of Invention

The present invention relates to the field of the electric vehicle charging technique, and more particularly to a charger with active protection function and a charging method thereof.

### Background of the invention

With the increasingly depleted fossil resource and the massive environmental pollution caused by fuel vehicles, in the automotive industry, concerns and investments on clean-running new energy vehicles have been sharply increased since the year 2000. It is predictable that in the near future there is going to be a rapidly increasing number of new energy vehicles, electric vehicles in particular, in the ownership of automobiles.

The electric vehicle comprises following elements for participating in the charging process: an automobile body comprising a recharge socket and a high voltage contactor, a power battery, a battery management system (BMS), a charger, a remote server such as a cloud platform and etc. The charging process of the conventional electric vehicles is controlled by BMS, wherein BMS controls parameters of the charging mode, the voltage and the current. However, the charger is only a unit capable of executing the order of the BMS during the charging process, and thus is not capable of detecting the entire charging process, the operating condition of BMS and the charging condition of the battery.

During the charging process, a plurality of security incidents caused by the fire breakout on an electric vehicle occurs in real world. Most of the fire breakout incidents are related to battery overcharge caused by the charger. While charging the electric vehicle, the charger keeps on interacting information with BMS, wherein the information includes battery related information such as SOC (State of Charge), single battery voltage and total voltage. Thus, during the process of charging the electric vehicle under the conventional conditions, the charger is fully capable of recording information of the voltage, the current and the electric quantity of the electric vehicle during every process of charging the electric vehicle. Thus, the charger possesses the capacity of monitoring and protecting the charging process.

However, the conventional chargers are only capable of outputting voltage passively according to the instructions of the BMS and not capable of monitoring and protecting the charging process, so battery overcharge is easily caused. Under the condition with a failure BMS, the charger continually charges the power battery for a long period of time according to the previous charging instruction, which easily results in charging the power battery continually under a condition that the power battery is fully charged. Charging a full power battery will cause a severe chemical reaction inside the power battery, and a most serious chemical reaction thereof is the fire breakout of the power battery.

### SUMMARY OF THE PRESENT INVENTION

In order to solve problems existed in the conventional arts, an object of the present invention is to provide a charger with an active protection function and a charging method thereof, so as to achieve detecting and handling anomaly parameters of a battery and anomaly BMS condition of an electric vehicle during the process of charging the electric vehicle.

A charger with active protection function, comprises: a power conversion module group, a monitoring unit and an output module group;
wherein the power conversion module group is respectively connected with the monitoring unit and the output module group;
the monitoring unit is connected with the output module group;
the charger with active protection function is connected with an electric vehicle via the output module group to charge the electric vehicle; and
when the charger with active protection function is connected with the electric vehicle, the charger with active protection function communicates with a battery management system (BMS) of a vehicle via the output module group.

A charging gun is provided on the output module group, wherein the output module group is connected with the electric vehicle via the charging gun to charge the electric vehicle.

A storage unit is provided on the monitoring unit, wherein the storage unit comprises a storage module and a remote server, the monitoring unit is connected with at least one of the storage module and the remote server, or connected with both of the storage module and the remote server.

An HMI (Human Machine Interface) and a mobile APP (application) are provided on the monitoring unit, and the HMI and the mobile APP is capable of sending an instruction to the monitoring unit and receiving warning information sent by the monitoring unit under the instruction of a user.

A charging method with active protection function comprises following steps of:
step (1): connecting a charger with a charging interface of an electric vehicle, giving a charging instruction via a monitoring unit by a user, sending the charging instruction to an output module group by the monitoring unit, wherein a communicating connection is established between the output module group of the charger and a BMS (battery management system) of the electric vehicle after receiving the charging instruction by the output module group of the charger;
step (2): obtaining parameters of the electric vehicle via the BMS, transmitting the parameters of the electric vehicle to the output module group and calculating a charging power according to the parameters of the electric vehicle by the output module group;
step (3): according to the charging power calculated in the step (2), performing power conversion according to information of the charging power via a power conversion module group under a control of the output module group, and outputting electric energy to charge the electric vehicle by the output module group, meanwhile, collecting charging data in real time during a charging process via the BMS by the output module group;
step (4): during the charging process, monitoring in real time and judging whether the charging data reach a preset warn value by the output module group;
step (5): during the charging process, when the charging data reach the preset warn value, judging whether the charging data reach a threshold value by the output module group; and
step (6): during the charging process, when the charging data reach the threshold value, terminating charging the power conversion module group under control of the output module group.

Preferably, the step (1) further comprises: after connecting the charger with the charging interface of the electric vehicle and giving the charging instruction via the monitoring unit by the user in the step (1), establishing a connection between the monitoring unit and a storage unit and obtaining historical charging data of the electric vehicle, and transmitting the historical charging data to the output module group by the monitoring unit.

Preferably, in the step (2), the output module group is capable of calculating the charging power according to the historical charging data of the electric vehicle.

Preferably, the step (4) further comprises: when the charging data fail to reach the preset warn value, judging whether a power battery reaches a regular charge terminating condition by the output module group, if yes, controlling the power conversion module group to stop charging by the output module group; if no, repeating the step (3) and step (4) for continuous charging.

Preferably, the step (5) further comprises: when the charging data monitored by the output module group reaches the preset warn value and is lesser than a preset threshold value, recording warn information by the output module group and repeating the steps (3)-(5) to continuously charge the electric vehicle.

Preferably, the step (6) further comprises: when the charging data monitored by the output module group reaches a preset threshold value, controlling the power conversion module group to stop charging by the output module group and recording charging data while stopping charging; meanwhile, sending stopping charging information to the monitoring unit by the output module group; after receiving the stopping charging information by the monitoring unit, sending charging information and charging fault information during a process of sending the stopping charging information by the monitor to an HMI (Human-Computer Interface) and a mobile APP (Application) which are respectively connected with the monitoring unit.

The present invention has beneficial effects as follows.

By presetting a warn value and a threshold value in the output module group, the present invention is capable of achieving a strategy of establishing a set of active security protection in the charger. During the charging output process by the charger, the output module group performs real-time data interaction with the BMS in the electric vehicle. The output module group obtains real-time charging data of the electric battery of the BMS, such as BMS message, a charging voltage and a charging current requested by the BMS, a power battery temperature, a total voltage of a battery pack and a single battery voltage. The output module group combines the warn value and the threshold value to judge whether the BMS and the power battery are in abnormal condition during the charging process. If the BMS and the battery data reach an warn value, the output module group warns; if the BMS and the battery data reach the threshold value, the charging is terminated. By establishing the data monitoring during the charging process mentioned above, the charger achieves judging and processing abnormal information and faults on the BMS and the power battery during the charging process, so as to effectively ensure that the BMS and the power battery are in a normal charging condition, prevent overcharge and incidents to the limits during the charging process and improve the security of the electric vehicle during the charging process.

### BRIEF DESCRIPTION OF THE DRAWINGS

Fig. 1 is a sketch view showing internal connections of a charger with active protection function according to a first preferred embodiment of the present invention.
Fig. 2 is a flow chart of a charging method of the charger with active protection function according to the first preferred embodiment of the present invention.
Fig. 3 is a sketch view showing internal connections of the charger with active protection function comprising a remote server.
Fig. 4 is a sketch view showing internal connections of the charger with active protection function comprising a storage module.
Fig. 5 is a flow chart of the charging method with active protection method comprising a storage unit.

### DETAILED DESCRIPTION OF THE PREFERRED EMBODIMENT

These and other objectives, features, and advantages of the present invention will become apparent from the following detailed description, the accompanying drawings, and the appended claims.

One skilled in the art will understand that the embodiment of the present invention as shown in the drawings and described above is exemplary only and not intended to be limiting. It will thus be seen that the objects of the present invention have been fully and effectively accomplished. Its embodiments have been shown and described for the purposes of illustrating the functional and structural principles of the present invention and is subject to change without departure from such principles.

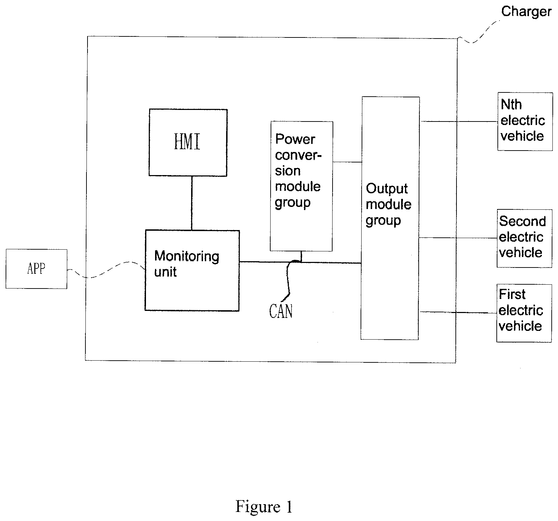

Referring to Figs. 1, 3 and 4, a charger with active protection function, comprises: a power conversion module group, a monitoring unit and an output module group;
wherein the power conversion module group is respectively connected with the monitoring unit and the output module group;
the monitoring unit is connected with the output module group;
the charger with active protection function is connected with an electric vehicle via the output module group to charge the electric vehicle; and
when the charger with active protection function is connected with the electric vehicle, the charger with active protection function communicates with a battery management system (BMS) of a vehicle via the output module group.

Preferably, a charging gun is provided on the output module group, wherein the output module group is connected with the electric vehicle via the charging gun to charge the electric vehicle.

Preferably, a storage unit is provided on the monitoring unit, wherein the storage unit comprises a storage module and a remote server, the monitoring unit is connected with at least one of the storage module and the remote server, or connected with both of the storage module and the remote server.

Preferably, an HMI (Human Machine Interface) and a mobile APP (application) are provided on the monitoring unit and the HMI and the mobile APP is capable of sending an instruction to the monitoring unit and receiving warn information sent by the monitoring unit under the instruction of a user.

Preferably, the power conversion module group is capable of converting a voltage of an alternating current power supply or a direct-current power supply to a voltage capable of charging the electric vehicle.

The monitoring unit, the power conversion module group and the output module group are connected via a bus.

The monitoring unit and the HMI are connected via a bus.

The monitoring unit is connected with an APP, such as a mobile APP via a wireless network such as WIFI, 3G, 4G, GPRS and Bluetooth. The monitoring unit is capable of transmitting warn information to the HMI and the mobile APP of a user.

The remote server is connected with the monitoring unit of the charger via a wired network or a wireless network, wherein the wireless network comprises WIFI, 3G, 4G, GPRS and Bluetooth. All or part of monitored data comprise vehicle data, charging data and historical charging data can be uploaded or downloaded between the monitoring unit and the remote server.

The storage module is connected with the monitoring unit via a bus, and the storage module is capable of storing one or more kinds of the vehicle data, charging data and the historical data monitored by the monitoring unit.

Referring to Figs. 1-5, a charging method with active protection function, comprises following steps of:
step (1): connecting a charger with a charging interface of an electric vehicle, giving a charging instruction via a monitoring unit by a user, sending the charging instruction to an output module group by the monitoring unit, wherein a communicating connection is established between the output module group of the charger and a BMS (battery management system) of the electric vehicle after receiving the charging instruction by the output module group of the charger;
step (2): obtaining parameters of the electric vehicle via the BMS, transmitting the parameters of the electric vehicle to the output module group and calculating a charging power according to the parameters of the electric vehicle by the output module group;
step (3): according to the charging power calculated in the step (2), performing power conversion according to information of the charging power via a power conversion module group under a control of the output module group, and outputting electric energy to charge the electric vehicle by the output module group, meanwhile, collecting charging data in real time during a charging process via the BMS by the output module group;
step (4): during the charging process, monitoring in real time and judging whether the charging data reach a preset warn value by the output module group;
step (5): during the charging process, when the charging data reach the preset warn value, judging whether the charging data reach a threshold value by the output module group; and
step (6): during the charging process, when the charging data reach the threshold value, terminating charging the power conversion module group under control of the output module group.

Preferably, the step (1) further comprises: after connecting the charger with the charging interface of the electric vehicle and giving the charging instruction via the monitoring unit by the user in the step (1), establishing a connection between the monitoring unit and a storage unit and obtaining historical charging data of the electric vehicle, and transmitting the historical charging data to the output module group by the monitoring unit.

Preferably, in the step (2), the output module group is capable of calculating the charging power according to the historical charging data of the electric vehicle.

Preferably, the step (4) further comprises: when the charging data fail to reach the preset warn value, judging whether a power battery reaches a regular charge terminating condition by the output module group, if yes, controlling the power conversion module group to stop charging by the output module group; if no, repeating the step (3) and step (4) for continuous charging.

Preferably, the step (5) further comprises: when the charging data monitored by the output module group reaches the preset warn value and is lesser than a preset threshold value, recording warn information by the output module group and repeating the steps (3)- (5) to continuously charge the electric vehicle.

Preferably, the step (6) further comprises: when the charging data monitored by the output module group reaches a preset threshold value, controlling the power conversion module group to stop charging by the output module group and recording charging data while stopping charging; meanwhile, sending stopping charging information to the monitoring unit by the output module group; after receiving the stopping charging information by the monitoring unit, sending charging information and charging fault information during a process of sending the stopping charging information by the monitor to an HMI (Human-Computer Interface) and a mobile APP (Application) which are respectively connected with the monitoring unit.

Further description of the present invention is illustrated as follows.

### Parameters of the Electric Vehicle

The parameters of the electric vehicle are all or part of the following data obtained via the BMS by the output module group before a start of charging the electric vehicle comprising:
vehicle model, BMS parameters, battery type, charging current and charging voltage of the battery, total battery capacity, single battery capacity, single voltage, battery total voltage, single-battery temperature, battery pack temperature, state of charge (SOC) of the battery before charging.

### Charging Data

The charging data comprises all or part of the following information:
battery type, charging current and charging voltage of the battery, total battery capacity, single battery capacity, single voltage, battery total voltage, single-battery temperature, battery pack temperature, state of charge (SOC) of the battery during each charging stage including before charging, during charging and after charging; battery warn and fault information transmitted by the BMS, warn and fault information of the BMS, and data information transmitted by the BMS in a normal state.

### Warn Value and Threshold Value

The warn value and the threshold value are obtained by the monitoring unit combining at least one member of the BMS parameter, the power battery parameter and a characteristic value of the battery, wherein the characteristic value of the battery comprises all or part of the information:
maximum single voltage of different types obtained from battery manufactures and/or battery research institutes, total battery pack voltage, maximum and/or minimum allowable temperature of the battery, maximum allowable voltage rising slope and/ or maximum allowable temperature rise slope.

Types of the warn value and the threshold value comprise:
overvoltage protection warn value and threshold value of the total voltage of the battery, over protection warn value and threshold value of SOC, overvoltage protection warn value and threshold value of the single voltage, over charge capacity protection warn value and threshold value, maximum and minimum battery temperature protection warn value and threshold value, maximum differential voltage protection warn value and threshold value of different monomers, warn value and threshold value of changing rate of total battery voltage, BMS data refresh rate warn value and threshold value, BMS communication interruption warn value and threshold value for judging frames, charger voltage sampling error and BMS voltage sampling error warn value and threshold value, and charger current sampling error and BMS current sampling error warn value and threshold value.

The process of judging the warn value and the threshold value of the charging data during the charging process is illustrated as follows.

The Overvoltage Protection Warn Value and Threshold Value of the Total Voltage of the Battery

Firstly, the overvoltage protection warn value X and threshold value Y of the total voltage of the battery are respectively preset in the output module group, such as 6V<X<8V.Value of Y is selected as a numerical range above an upper limit of the warn value by a certain proportion. If the proportion is 5%, the range of the threshold Y is: 8.0V≤Y≤8.4V. During the charging process, a total voltage of the battery monitored by the output module group is VI, when V1 is equal to or smaller than a lower limit value of X, i.e. 6V, the charger charges normally; when VI is within the range of the warn value X, i.e., 6V< V1<8V, the output module group warns the HMI and the mobile APP of the warn information via the monitoring unit and records a real-time value of V1; and when VI exceeds a rang of the warn value X, i.e., VI reaches a range of the value of Y, the output module group controls the power conversion module group to terminate power conversion and charging output.

All types of warn value and threshold value of the present invention can be set according to protection range mentioned above. One skilled in the art can set the value of the warn value and the threshold value according to the method mentioned above, which is not illustrated in detail here.

### Historical Charging Data

The historical charging data are charging data collected and uploaded to the storage unit while charging the electric vehicle by the charger for the first time and each subsequent time afterwards, which comprises all or part of the following information:
battery type, charging current and charging voltage of the battery, total battery capacity, single battery capacity, single voltage, battery total voltage, single-battery temperature, battery pack temperature, state of charge (SOC) of the battery during each charging stage including before charging, during charging and after charging; battery warn and fault information transmitted by the BMS, warn and fault information of the BMS, and data information transmitted by the BMS in a normal state.

### Terminating Conditions of Normal Charging

The normal terminating conditions of normal charging comprise: a user set terminating condition comprising charging time, cost amount and electric quantity; battery SOC value, battery current and voltage, charging terminating instruction feedback to the monitoring unit of the charger when the BMS is in a normal condition.

The instruction set by the user is the starting and ending time of charging, charging quantity, charging current, and charging voltage and cost of the charging.

Further description of the present invention is illustrated combining with the preferred embodiment of the present invention.

### Embodiment 1

Referring to Fig. 1, a charger with active protection function, comprises: a power conversion module group, a monitoring unit and an output module group;
wherein the power conversion module group is respectively connected with the monitoring unit and the output module group;
the monitoring unit is connected with the output module group;
the charger with active protection function is connected with an electric vehicle via the output module group to charge the electric vehicle; and
when the charger with active protection function is connected with the electric vehicle, the charger with active protection function communicates with a battery management system (BMS) of a vehicle via the output module group.

A charging gun is provided on the output module group, wherein the output module group is connected with the electric vehicle via the charging gun to charge the electric vehicle. The charging gun is corresponded one to one with the output module group, and one charging gun is corresponded to one charging position.

An HMI (Human Machine Interface) and a mobile APP (application) are provided on the monitoring unit, and the HMI and the mobile APP is capable of sending an instruction to the monitoring unit under the instruction of a user.

The power conversion module group is capable of converting a voltage of an alternating current power supply or a direct-current power supply to a voltage capable of charging the electric vehicle.

The monitoring unit, the power conversion module group and the output module group are connected via a bus.

The monitoring unit and the HMI are connected via a bus.

The monitoring unit is connected with an APP, such as a mobile APP via a wireless network such as WIFI, 3G, 4G, GPRS and Bluetooth. The monitoring unit is capable of transmitting warn information to the HMI and the mobile APP of a user.

The remote server is connected with the monitoring unit of the charger via a wired network or a wireless network, wherein the wireless network comprises WIFI, 3G, 4G, GPRS and Bluetooth. All or part of monitored data comprise vehicle data, charging data and historical charging data can be uploaded or downloaded between the monitoring unit and the remote server.

The power conversion module group is respectively connected with the monitoring unit and the output module group, the monitoring unit is connected with the output module group, wherein a connection manner comprises electric connection and bus connection such as CAN bus and RS485 bus.

The output module group is connected with the electric vehicle for charging the electric vehicle, and the output module group is capable of establishing a communication connection with the BMS on the electric vehicle.

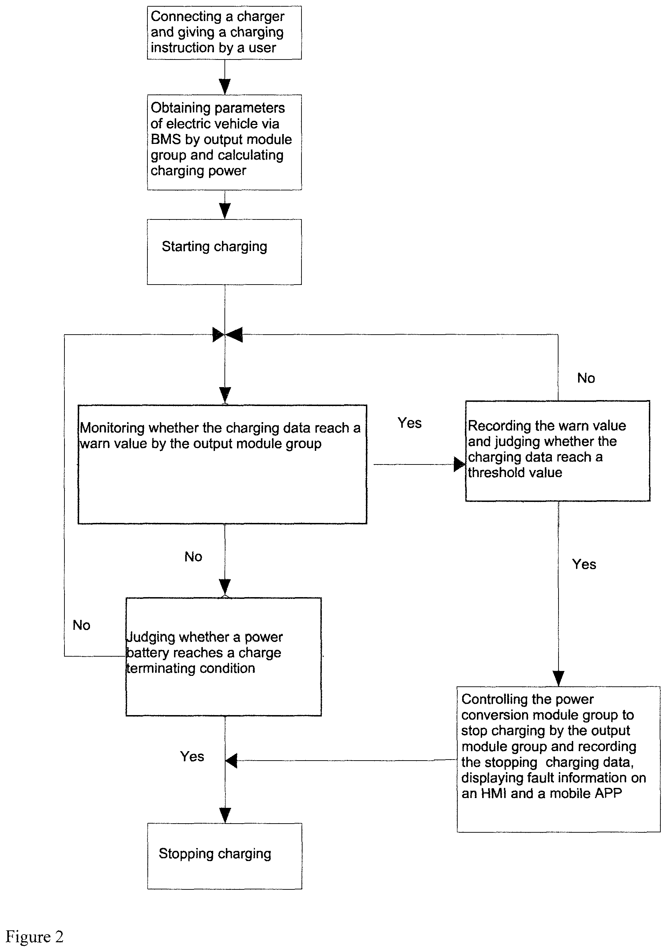

Referring to Fig. 2, a charging method with active protection function, comprises following steps of:
step (1): connecting a charger with a charging interface of an electric vehicle, giving a charging instruction via an HMI and an APP by a user, sending the charging instruction to an output module group by the monitoring unit, wherein a communicating connection is established between the output module group of the charger and a BMS (battery management system) of the electric vehicle after receiving the charging instruction by the output module group of the charger, establishing a connection between the monitoring unit and the storage unit, obtaining historical charging data of the electric vehicle and transmitting the historical charging data to the output module group by the monitoring unit;
step (2): obtaining parameters of the electric vehicle via the BMS, transmitting the parameters of the electric vehicle to the output module group and calculating a charging power according to the parameters of the electric vehicle by the output module group;
step (3): according to the charging power calculated in the step (2), performing power conversion according to information of the charging power via a power conversion module group under a control of the output module group, and outputting electric energy to charge the electric vehicle by the output module group, meanwhile, collecting charging data in real time during a charging process via the BMS by the output module group;
step (4): during the charging process, monitoring in real time and judging whether the charging data reach a preset warn value by the output module group;
step (5): during the charging process, when the charging data reach the preset warn value, judging whether the charging data reach a threshold value by the output module group; and
step (6): during the charging process, when the charging data reach the threshold value, terminating charging the power conversion module group under control of the output module group.

The step (4) further comprises: when the charging data fail to reach the preset warn value, judging whether a power battery reaches a regular charge terminating condition by the output module group, if yes, controlling the power conversion module group to stop charging by the output module group; if no, repeating the step (3) and step (4) for continuous charging.

The step (5) further comprises: when the charging data monitored by the output module group reaches the preset warn value and is lesser than a preset threshold value, recording warn information by the output module group and repeating the steps (3)- (5) to continuously charge the electric vehicle.

The step (6) further comprises: when the charging data monitored by the output module group reaches a preset threshold value, controlling the power conversion module group to stop charging by the output module group and recording charging data while stopping charging; meanwhile, sending stopping charging information to the monitoring unit by the output module group; after receiving the stopping charging information by the monitoring unit, sending charging information and charging fault information during a process of sending the stopping charging information by the monitor to an HMI (Human-Computer Interface) and a mobile APP (Application) which are respectively connected with the monitoring unit.

### Embodiment 2

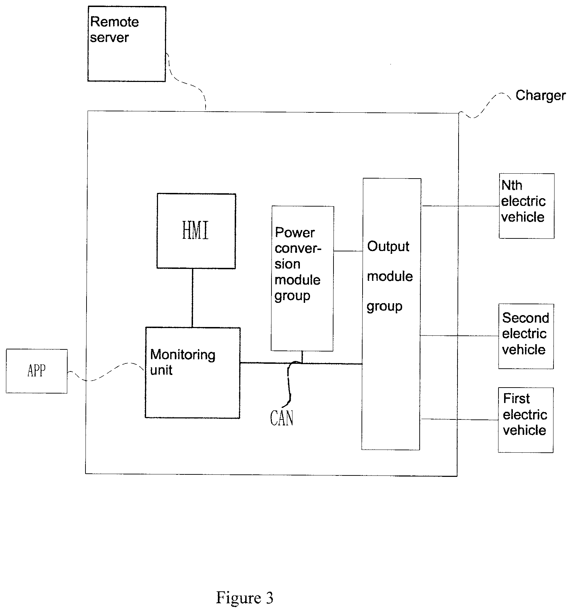

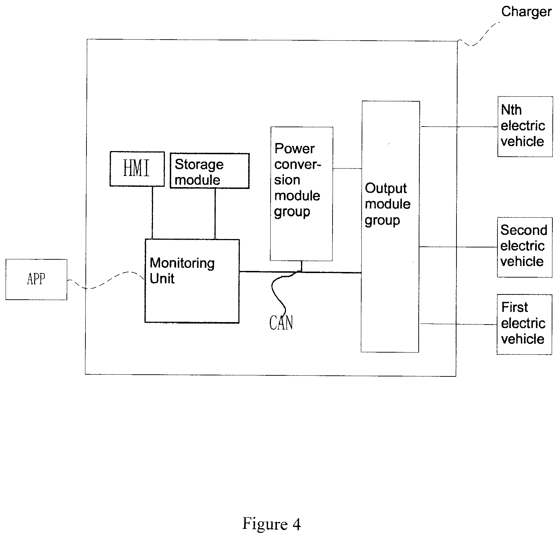

Referring to Figs. 3 and 4, a charger with active protection function, comprises: a power conversion module group, a monitoring unit and an output module group;
wherein the power conversion module group is respectively connected with the monitoring unit and the output module group;
the monitoring unit is connected with the output module group;
the charger with active protection function is connected with an electric vehicle via the output module group to charge the electric vehicle; and
when the charger with active protection function is connected with the electric vehicle, the charger with active protection function communicates with a battery management system (BMS) of a vehicle via the output module group.

A charging gun is provided on the output module group, wherein the output module group is connected with the electric vehicle via the charging gun to charge the electric vehicle.

A storage unit is provided on the monitoring unit, wherein the storage unit comprises a storage module and a remote server, the monitoring unit is connected with at least one of the storage module and the remote server, or connected with both of the storage module and the remote server.

The remote server is connected with the monitoring unit of the charger via a wired network or a wireless network, wherein the wireless network comprises WIFI, 3G, 4G, GPRS and Bluetooth. All or part of monitored data comprise vehicle data, charging data and historical charging data can be uploaded or downloaded between the monitoring unit and the remote server.

The storage module is connected with the monitoring unit via a bus, and the storage module is capable of storing one or more kinds of the vehicle data, charging data and the historical data monitored by the monitoring unit.

The power conversion module group is capable of converting a voltage of an alternating current power supply or a direct-current power supply to a voltage capable of charging the electric vehicle.

The monitoring unit, the power conversion module group and the output module group are connected via a bus.

The monitoring unit and the HMI are connected via a bus.

The HMI (Human Machine Interface) and a mobile APP (application) are provided on the monitoring unit, and the HMI and the mobile APP is capable of sending an instruction to the monitoring unit. The monitoring unit is capable of transmitting warn information to the HMI and the mobile APP of a user.

The monitoring unit and the mobile APP is connected by a wireless network comprises WIFI, 3G, 4G, GPRS and Bluetooth

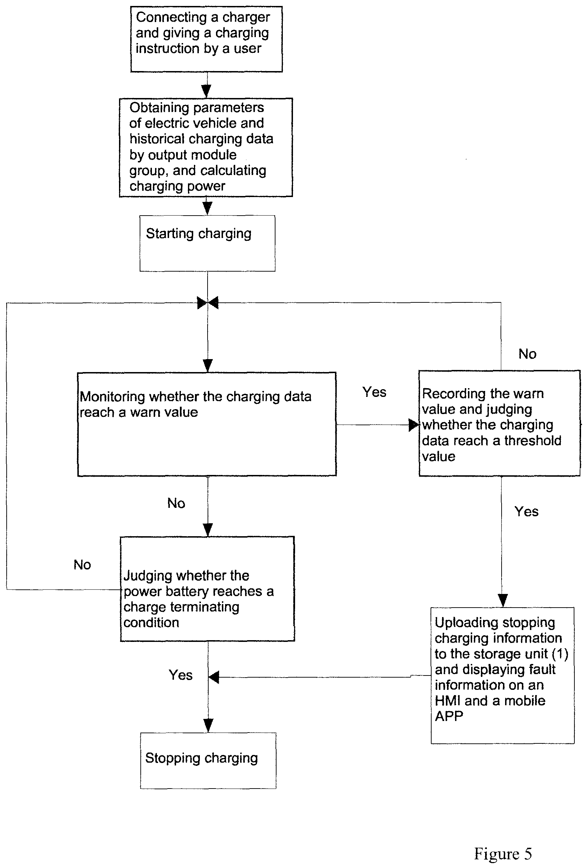

Referring to Fig. 5, a charging method with active protection function, comprises following steps of:
step (1): connecting a charger with a charging interface of an electric vehicle, giving a charging instruction via a monitoring unit by a user, sending the charging instruction to an output module group by the monitoring unit, wherein a communicating connection is established between the output module group of the charger and a BMS (battery management system) of the electric vehicle after receiving the charging instruction by the output module group of the charger; establishing a connection between the monitoring unit and the storage unit and obtaining historical charging data of the electric vehicle, and transmitting the historical charging data to the output module group by the monitoring unit;
step (2): obtaining parameters of the electric vehicle via the BMS, transmitting the parameters of the electric vehicle to the output module group and calculating a charging power according to the parameters of the electric vehicle by the output module group;
step (3): according to the charging power calculated in the step (2), performing power conversion according to information of the charging power via a power conversion module group under a control of the output module group, and outputting electric energy to charge the electric vehicle by the output module group, meanwhile, collecting charging data in real time during a charging process via the BMS by the output module group;
step (4): during the charging process, monitoring in real time and judging whether the charging data reach a preset warn value by the output module group;
step (5): during the charging process, when the charging data reach the preset warn value, judging whether the charging data reach a threshold value by the output module group; and
step (6): during the charging process, when the charging data reach the threshold value, terminating charging the power conversion module group under control of the output module group.

In the step (2), the output module group is capable of calculating the charging power according to the historical charging data of the electric vehicle.

The step (3) further comprises: restoring the charging data collected in real time by the output module group to the storage unit for a backup copy.

The step (4) further comprises: when the charging data fail to reach the preset warn value, judging whether a power battery reaches a regular charge terminating condition by the output module group, if yes, controlling the power conversion module group to stop charging by the output module group; if no, repeating the step (3) and step (4) for continuous charging.

The step (5) further comprises: when the charging data monitored by the output module group reaches the preset warn value and is lesser than a preset threshold value, recording warn information by the output module group and repeating the steps (3)- (5) to continuously charge the electric vehicle.

The step (6) further comprises: when the charging data monitored by the output module group reaches a preset threshold value, controlling the power conversion module group to stop charging by the output module group and recording charging data while stopping charging; meanwhile, sending stopping charging information to the monitoring unit by the output module group; after receiving the stopping charging information by the monitoring unit, sending charging information and charging fault information during a process of sending the stopping charging information by the monitor to an HMI (Human-Computer Interface) and a mobile APP (Application) which are respectively connected with the monitoring unit.

In the Embodiment 2, the warn value and the threshold value is set with identical manner of the Embodiment 1, however, a storage unit having data backup function is further added. The monitoring unit of the charger is capable of uploading and downloading electric vehicle data, charging data and historical charging data to or from the storage unit. Before charging, the monitoring unit calculates charging power according to at least one kind of the charging data or the historical charging data; the output module group monitors the charging data in real time during the charging process and uploading the data to the storage unit. If the warn value or the threshold value appears during the charging process, the output module group accordingly sends warn information and charging terminating information to the storage unit, i.e., abnormal charging information reaching the warn value and the threshold value, to the storage unit and sends the charging data at the moment when the warn value or the threshold value appears to the storage unit.

The function of storing charging data is capable of recording charging data comprising the warn value, the threshold value, charging data during a process of fault information appears, so as to provide data support for Big Data in a later stage treatment, vehicle diagnosis and maintenance and BMS diagnosis and maintenance.

## Claims

1. A charger with active protection function comprising: a power conversion module group, a monitoring unit and an output module group;
wherein the power conversion module group is respectively connected with the monitoring unit and the output module group;
the monitoring unit is connected with the output module group;
the charger with active protection function is connected with an electric vehicle via the output module group to charge the electric vehicle; and
when the charger with active protection function is connected with the electric vehicle, the charger with active protection function communicates with a battery management system (BMS) of a vehicle via the output module group.

2. The charger with active protection function, as recited in claim 1, wherein a charging gun is provided on the output module group, wherein the output module group is connected with the electric vehicle via the charging gun to charge the electric vehicle.

3. The charger with active protection function, as recited in claim 1, wherein a storage unit is provided on the monitoring unit, wherein the storage unit comprises a storage module and a remote server, the monitoring unit is connected with at least one of the storage module and the remote server, or connected with both of the storage module and the remote server.

4. The charger with active protection function, as recited in claim 1, wherein an HMI (Human Machine Interface) and a mobile APP (application) are provided on the monitoring unit, and the HMI and the mobile APP is capable of sending an instruction to the monitoring unit and receiving warning information sent by the monitoring unit under the instruction of a user.

5. A charging method with active protection function, comprising following steps of:
step (1): connecting a charger with a charging interface of an electric vehicle, giving a charging instruction via a monitoring unit by a user, sending the charging instruction to an output module group by the monitoring unit, wherein a communicating connection is established between the output module group of the charger and a BMS (battery management system) of the electric vehicle after receiving the charging instruction by the output module group of the charger;
step (2): obtaining parameters of the electric vehicle via the BMS, transmitting the parameters of the electric vehicle to the output module group and calculating a charging power according to the parameters of the electric vehicle by the output module group;
step (3): according to the charging power calculated in the step (2), performing power conversion according to information of the charging power via a power conversion module group under a control of the output module group, and outputting electric energy to charge the electric vehicle by the output module group, meanwhile, collecting charging data in real time during a charging process via the BMS by the output module group;
step (4): during the charging process, monitoring in real time and judging whether the charging data reach a preset warn value by the output module group;
step (5): during the charging process, when the charging data reach the preset warn value, judging whether the charging data reach a threshold value by the output module group; and
step (6): during the charging process, when the charging data reach the threshold value, terminating charging the power conversion module group under control of the output module group.

6. The charging method with active protection function, as recited in claim 5, wherein the step (1) further comprises a step of: after connecting the charger with the charging interface of the electric vehicle and giving the charging instruction via the monitoring unit by the user in the step (1), establishing a connection between the monitoring unit and a storage unit and obtaining historical charging data of the electric vehicle, and transmitting the historical charging data to the output module group by the monitoring unit.

7. The charging method with active protection function, as recited in claim 6, wherein in the step (2), the output module group is capable of calculating the charging power according to the historical charging data of the electric vehicle.

8. The charging method with active protection function, as recited in claim 5, wherein the step (4) further comprises: when the charging data fail to reach the preset warn value, judging whether a power battery reaches a regular charge terminating condition by the output module group, if yes, controlling the power conversion module group to stop charging by the output module group; if no, repeating the step (3) and step (4) for continuous charging.

9. The charging method with active protection function, as recited in claim 5, wherein the step (5) further comprising: when the charging data monitored by the output module group reaches the preset warn value and is lesser than a preset threshold value, recording warn information by the output module group and repeating the steps (3)-(5) to continuously charge the electric vehicle.

10. The charging method with active protection function, as recited in claim 5, wherein the step (6) further comprises: when the charging data monitored by the output module group reaches a preset threshold value, controlling the power conversion module group to stop charging by the output module group and recording charging data while stopping charging; meanwhile, sending stopping charging information to the monitoring unit by the output module group; after receiving the stopping charging information by the monitoring unit, sending charging information and charging fault information during a process of sending the stopping charging information by the monitor to an HMI (Human-Computer Interface) and a mobile APP (Application) which are respectively connected with the monitoring unit.
